# EUROPEAN PATENT SPECIFICATION

(11) **EP 0 939 404 B1**
(45) Date of publication and mention of the grant of the patent: **15.05.2002**
(21) Application number: 99102821.8
(22) Date of filing: 26.02.1999
(51) Int. Cl.: G11B 23/03, G11B 23/023, B65D 85/57, G11B 33/04

(54) **Cartridge and storage case for cartridge**
Kassette und Aufbewahrungsbehälter für Kassette
Cassette et boîte à stockage pour cassette

(30) Priority: 27.02.1998 JP 6199598
(43) Date of publication of application: 01.09.1999
(73) Proprietor: TDK Corporation, Chuo-ku, Tokyo 103-8272 (JP)
(72) Inventor: Ikebe, Masaru, Tokyo 103-8272 (JP); Miyazaki, Yukio, Tokyo 103-8272 (JP)
(74) Representative: HOFFMANN - EITLE

(56) References cited:
- EP-A- 0 632 454
- EP-A- 0 791 928
- US-A- 5 450 952
- US-A- 5 540 328

## Description

### BACKGROUND OF THE INVENTION

### Filed of the Invention

The present invention relates generally to a cartridge and a storage case for a cartridge and more particularly to a cartridge and a storage case for a cartridge which contains a recording medium such as an optical disc and a magneto-optical disc etc.

### Related Background Art

A mini disc, which has been used in recent years for applications such as record of music and data storage etc, is composed of a disc portion defined as a recording medium, and a resinous cartridge for storing the disc portion. It is a general practice that the mini disc is encased in the storage case incorporating functions such as a dust-proof and an impact resistance etc.

What is exemplified as this storage case is, as disclosed in, e.g., Japanese Utility Model Post-Exam No. 3-20313, that the storage case is constructed of a cover and a main body, wherein the cartridge encased therein can be taken out by turning the cover. Another example of the storage case is, as disclosed in, e.g., Japanese Patent Application Laid-Open No.5-278772, that the cartridge exposed from a notch formed in an opening formed in one side surface of the storage case, can be taken out by picking it with fingers.

Incidentally, in the case of the storage case of which one side surface is formed with the opening, when the opening is directed downward in a state of its being stored with the cartridge, there might be a possibility in which the cartridge falls down by a self-weight thereof. Accordingly, this type of storage case is generally provided with a mechanism for preventing the cartridge from coming off. This mechanism is at first explained.

A general type of cartridge has recess-like engagement portions formed in side surfaces facing to each other. These recess-like engagement portions, when the cartridge is inserted into a recording/reproducing apparatus for a recording medium, engage with pawl-like members of a carrier device provided in the recording/reproducing apparatus, and with this engagement the cartridge can be carried within the recording/reproducing apparatus.

Such being the case, in the storage case having the opening formed in its one side surface according to the prior art, the cartridge is prevented from coming off by utilizing the recess-like engagement portions of the cartridge. More specifically, protrusions corresponding to the recess-like engagement portions are provided inwardly of the storage case and, when the cartridge is inserted into the storage case, engage with the recess-like engagement portions, thereby preventing the cartridge from coming off. These protrusions are supported by elastic members. When the cartridge is inserted, the elastic members elastically deform enough to move the protrusions off an insertion path of the cartridge, thus permitting the insertion of the cartridge.

There arise, however, the following problems inherent in the prior art storage case. The cartridge takes the rectangular configuration and is allowed to be inserted into the storage case from an edge portion to be inserted into the recording/reproducing apparatus for the recording medium, or from an edge portion opposite to the former.

If the cartridge is inserted into the storage case from the edge portion opposite to the edge portion to be inserted into the recording/reproducing apparatus for the recording medium, however, the protrusions of the storage case do not engage with the recess-like engagement portions but impinge upon the side surfaces thereof and are kept as they are. In such a state also, the cartridge is prevented from coming off to some extent by a frictional force acting between the protrusions and the cartridge side surfaces on the basis of an elastic force given from the elastic members which support the protrusions, and nevertheless it follows that these elastic members remain in an as-elastically-deformed state. If this state continues for a long period of time, the elastic members lose their elastic force, and the frictional force between the protrusions and the cartridge side surfaces decreases, resulting in a possibility in which the cartridge might come off.

On the other hand, the recording/reproducing apparatus for the recording medium, into which the cartridge is inserted, incorporates a variety of mechanisms in the vicinity of the cartridge inserted, and, if the cartridge surface is formed with rugged portions, a part of the mechanism is caught thereon with the result that its function might be deteriorated. Accordingly, there exists a reality that a strict designation is given to where the recess-like engagement portions are formed in the cartridge, and it may be conceived difficult to newly form a cavity such as the recess-like engagement portion in a place from which the cartridge is exposed all the time.

While on the other hand, it can be considered that the storage case has a structure for enabling the cartridge to be inserted in only one direction. However, the cartridge assumes the rectangular shape, and therefore it must be more convenient for users that the storage case receives the insertions in any directions.

A cartridge according to the preamble of claim 1 is disclosed in US 5,450,952. However, also in this case the cartridge comprises a single pair of recess-like engagement portions, which are adapted to be engaged by protruded portions of a cartridge storing case in order to retain the cartridge in the case. When the cartridge is inserted in the wrong direction, it can not be held within the case.

### SUMMARY OF THE INVENTION

It is a primary object of the present invention to provide a cartridge and a storage case for storing the cartridge, which are constructed to reduce such a possibility that the cartridge might come off even if inserted in a misdirection.

To accomplish the above object, according to first aspect of the present invention, a cartridge comprises the features of claim 1. This cartridge comprises a main body stored with a recording medium and formed with an opening from which at least a part of the recording medium is exposed, and a shutter member movable between an opening position for opening the opening and a closing position for closing the opening. There is formed a recessed portion covered with the shutter member when the shutter member moves to the opening position, and exposed when the shutter member moves to the closing position, and the exposed recessed portion becomes capable of engaging with a protruded portion provided within a storage case for the cartridge when the cartridge is inserted into the cartridge storage case.

According to the cartridge of the present invention, when the shutter member moves to the closing position, the recessed portion is exposed and is therefore, when the cartridge is inserted into, e.g., the cartridge storage case, capable of engaging with the protrusion provided within the cartridge storage case. This contrivance makes it feasible to prevent the cartridge from coming off the cartridge storage case. While on the other hand, when the shutter member moves to the opening position, the recessed portion is covered with the shutter member. Hence, when inserted into, e.g., a recording/reproducing apparatus for a recording medium, a mechanism of the recording/reproducing apparatus can be prevented from being caught on the recessed portion by its being covered with the shutter member.

According to a second aspect of the invention, a pair of recess-like engagement portions engaging with the protruded portions provided within a recording or reproducing apparatus for the recording medium when inserted into the recording or reproducing apparatus for the recording medium, are formed in the vicinity of an edge on the inserting side. The recessed portion is formed in the vicinity of an edge portion on the side opposite to the edge portion on the inserting side, and a distance between the edge portion on the inserting side and the recess-like engagement portion is approximately equal to a distance between the edge portion on the opposite side and the recessed portion.

According to a third aspect of the invention, a pair of protrusions of the cartridge storage case are provided in a face-to-face relationship, the cartridge is formed with only one recessed portion, and the cartridge is formed with minute rugged portions facing to the protrusions not engaging with the recessed portions.

According to a fourth aspect of the invention, a pair of protrusions of the cartridge storage case are supported by elastic members capable of being elastically deformed, the protrusions permit the insertion of the cartridge because of the elastic members being deformed when the cartridge is inserted into the cartridge storage case, and the elastic members revert to their original shapes from the deformations thereof after the cartridge has been inserted, and engage with the recessed portions or the recess-like engagement portions, thereby preventing a separation of the cartridge from the cartridge storage case.

According to a fifth aspect of the invention, when the cartridge is inserted into the cartridge storage case in the same direction as that in the case of being inserted into the recording or reproducing apparatus, the protrusion engages with the recess-like engagement portion, and when the cartridge is inserted into the cartridge storage case in the direction opposite to that in the case of being inserted into the recording or reproducing apparatus, the protrusion engages with the recessed portion.

According to a sixth aspect of the invention, a cartridge storage case is capable of storing the cartridge, and one side surface of the case is formed with an opening for inserting the cartridge.

Other features and advantages of the present invention will become readily apparent from the following description taken in conjunction with the accompanying drawings.

### BRIEF DESCRIPTION OF THE DRAWINGS

The accompanying drawings, which are incorporated in and constitute a part of the specification, illustrate presently preferred embodiments of the invention, and together with the general description given above and the detailed description of the preferred embodiments given below, serve to explain the principle of the invention, in which:
FIG. 1 is a view showing how components of a mini disc 100 are assembled in one embodiment;
FIG. 2 is a perspective view showing the mini disc after being assembled;
FIG. 3 is a bottom view of the mini disc 100;
FIG. 4 is a perspective view of a storage case capable of storing the mini disc in the embodiment, showing a state where a cover member is closed;
FIG. 5 is a perspective view of the storage case capable of storing the mini disc in the embodiment, showing a state where the cover member is opened;
FIG. 6 is a perspective view showing only the cover member 20;
FIG. 7 is a perspective view showing only a main body 30;
FIG. 8 is a perspective view showing the underside of the cover member 20 when reversed; and
FIG. 9 is a view showing the underside of the cover member 20.

### DESCRIPTION OF THE PREFERRED EMBODIMENT

An embodiment of the present invention will hereinafter be described with reference to the accompanying drawings.

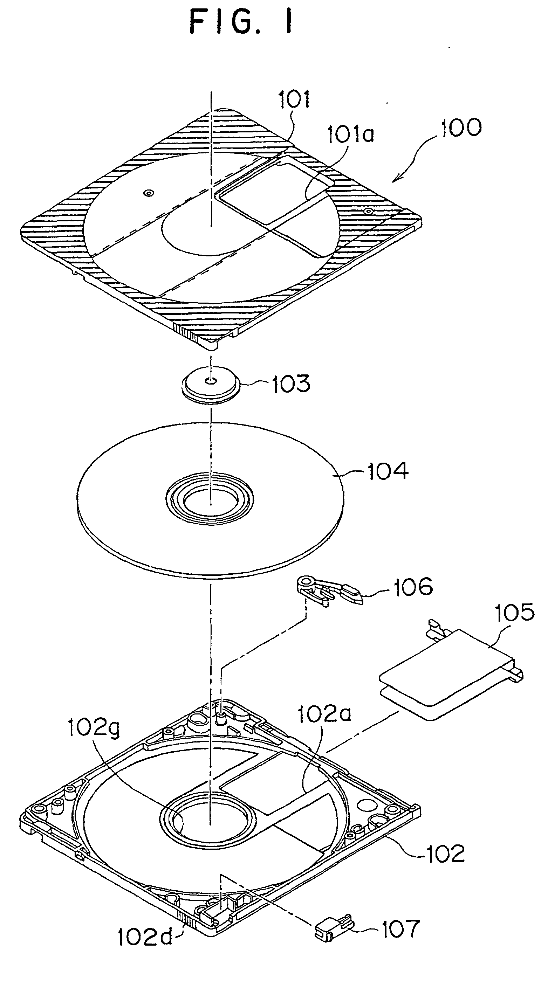

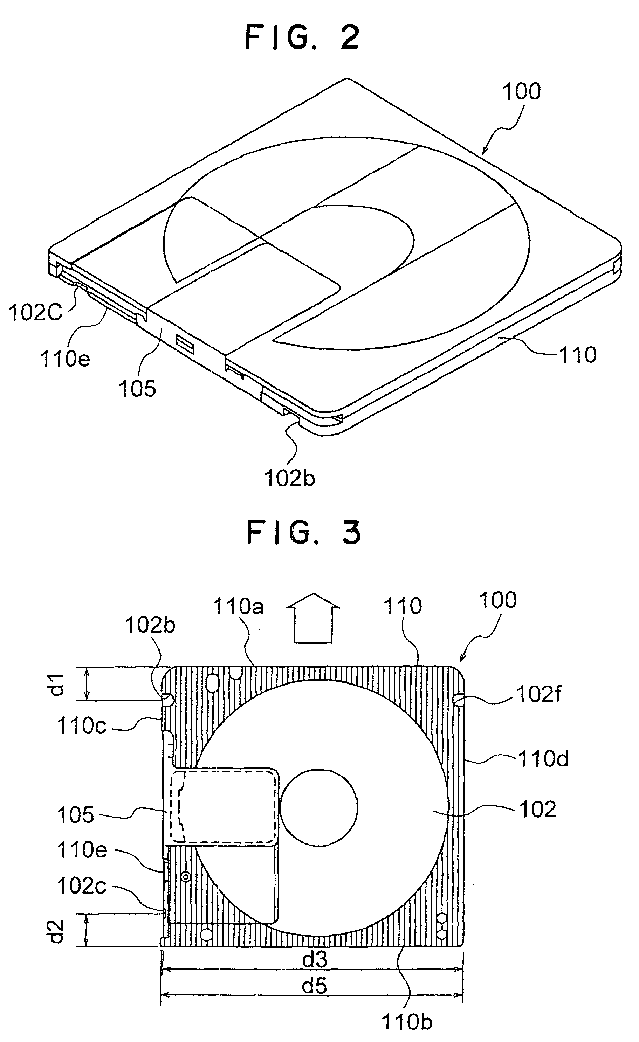

To start with, a mini disc in this embodiment will be explained. FIG. 11 is a view showing how components of a mini disc 100 in this embodiment are assembled. FIG. 2 is a perspective view of the mini disc 100 after being assembled. FIG. 3 is a bottom view of the mini disc 100. Note that perspective directions in FIGS. 1 and 2 are opposite to each other for an explanatory convenience.

In the mini disc 100 illustrated in FIG. 1, a rectangular upper shell 101 is superposed on a rectangular lower shell 102, whereby a thin box-like structure is obtained. A disc-like disc portion 104 defined as a recording medium is rotatably inset in between the upper and lower shells 101, 102 through a clamping plate 103. Note that the upper and lower shells 101, 102 are combined to constitute a cartridge 110.

Rectangular openings 101a, 102a receiving a recording/reproducing head (not shown) when inserted into a recording/reproducing apparatus, are formed in a face-to-face relationship in the vicinities of the central portions of the upper and lower shells 101, 102. Further, a shutter member 105 constructed by folding a thin plate is fitted in such a way that the cartridge 110 is sandwiched in between the plates of the shutter member 105, thus shutting the openings 101a, 102a. The shutter member 105 is slidable on the cartridge 110, and stays in a closing position for shutting the openings 101a, 102a in a state shown in FIGS. 1 to 3. Note that the central portion of the lower shell 102 is formed with a circular central opening 102g into which a rotary drive shaft (unillustrated) of the recording/reproducing apparatus.

A lock member 106 is incorporated into the cartridge 110 and engages with the shutter member 105 slid to the closing position, thus functioning to prevent the slide member from being unintentionally opened. Note that a plug 107 is so provided at one corner thereof as to be slightly slidable. It can be judged from a slide position of the plug 107 whether or not the record on the disc portion 104 has already been done.

Referring to FIG. 3, an inserting direction of the mini disc 100 is upward (an arrow direction). Referring again to FIG. 3, the cartridge 110 has, though only the lower shell 102 is visible, an edge surface 110a from which the cartridge 110 is inserted, an edge surface 110b opposite to the insertion side thereof, and side surfaces 110c, 110d disposed on right and left sides of the cartridge 110. The cartridge 110 is formed with a guide channel 110e sunk corresponding to a plate thickness of the shutter member 105 from the upper/lower and side surfaces of the cartridge 110 in a slide direction of the shutter member 105.

Referring to FIGS. 3 and 2, semi-circularly notched recess-like engagement portions 102b, 102f are formed in the side surfaces 110c, 110d of the lower shell 102 in the vicinity of the edge surface 110 disposed upward in FIG. 3. On the other hand, a recessed portion 102c notched in a trapezoidal shape is formed within the guide channel 110e in the vicinity of the edge surface 110b disposed downward in FIG. 3 as well as in the side surface 110c, disposed leftward in FIG. 3, of the lower shell 102.

Note that no recessed portion is formed in the side surface 110d, disposed rightward in FIG. 3, of the lower shell 102, however, as shown in FIG. 1, a plurality of minute recessed grooves 102d formed extending in parallel to an axial line of the disc portion 104 in a position facing to the recessed portion 102c. these recessed grooves 102d shape rugged portions.

Let d1 be a distance from the upper edge surface 110a in FIG. 3 to the center of the recess-like engagement portion 102b, and d2 be a distance from the lower edge surface 110b in FIG. 3 to the center of the recessed portion 102c, and there is established a relationship such as d1 = d2.

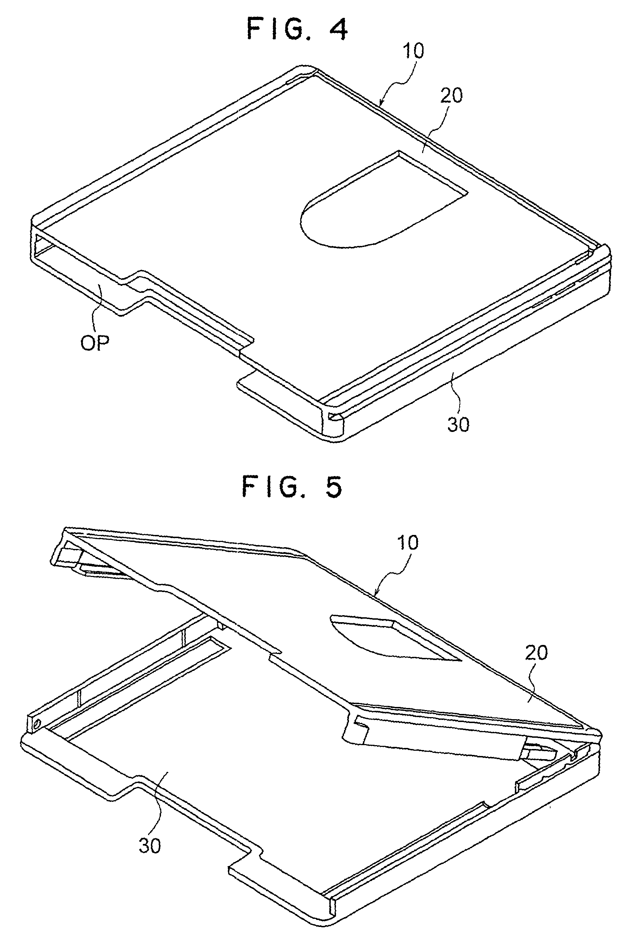

Next, the storage case in this embodiment will be explained. FIGS. 4 and 5 are perspective views each illustrating the storage case in this embodiment, which is capable of encasing the mini disc 100. FIG. 4 shows a state where a cover member is closed (i.e., the cover member is in a closing position). FIG. 5 shows a state where the cover member is opened (i.e., the cover member is in an opening position).

Referring to FIGS. 4 and 5, a thin box-like storage case 10 is constructed of a cover member 20 and a main body 30 defined as a separate member from the cover member 20. As illustrated in FIG. 4, the storage case 10 is formed with an opening OP at a front surface thereof, through which the mini disc 100 can be taken in and out even in such a state that the cover member 20 is closed. Incidentally, it is preferable that the main body 30 and the cover member 20 be composed of a resin exhibiting transparency such as polycarbonate resin, polystyrene resin, acrylic resin and AS resin.

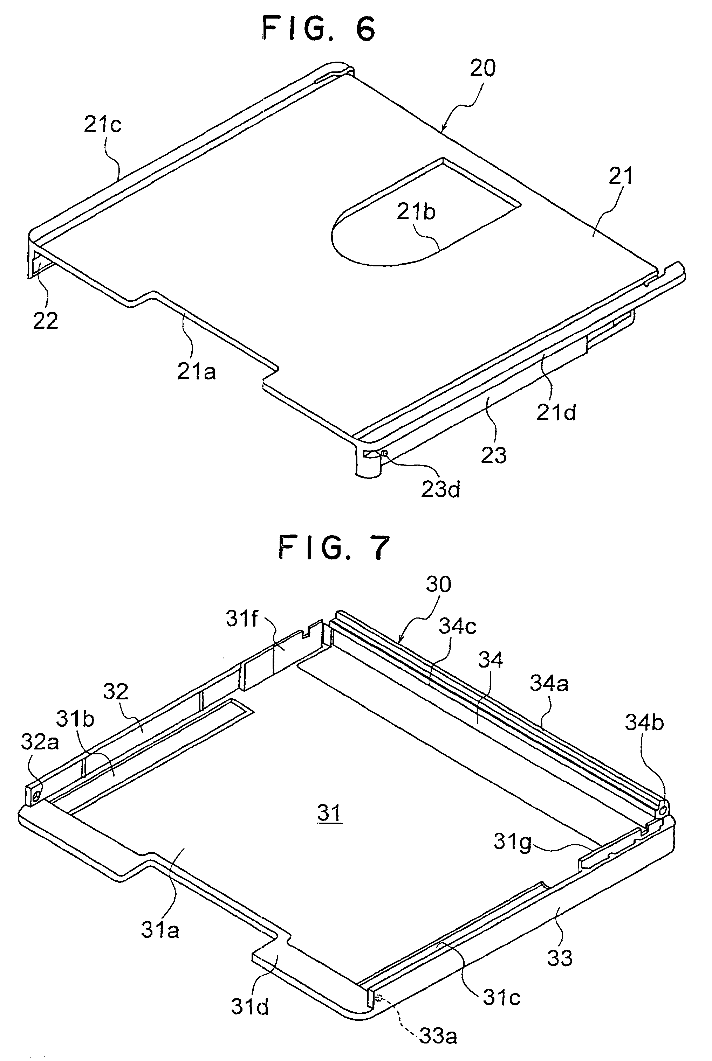

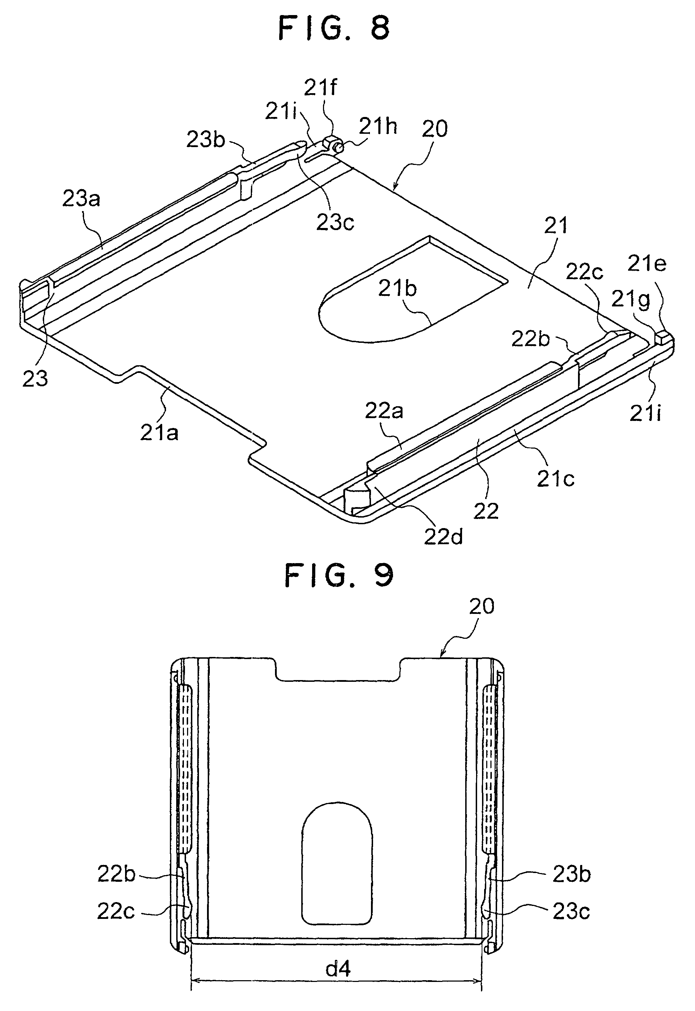

FIG. 6 is a perspective view showing only the cover member 20. FIG. 7 is a perspective view showing only the main body 30. FIG. 8 is a perspective view showing the underside of the cover member 20 when reversed. Referring to FIG. 7 , to begin with, the main body 30 is explained. The main body 30 is integrally constructed of a rectangular bottom wall 31, a left side wall 32 connected to one side of the bottom wall 31, a right side wall 33 connected to one side facing to the above one side, and a depthwise wall 34 connected to one side of the bottom wall 31 and orthogonal to two side walls 32, 33. The bottom wall 31 is formed with a rectangular notched portion 31a along one side facing to the one side to which the depthwise wall 34 is connected (which is hereinafter referred to as an opening-formed side). Further, the bottom wall 31 is formed with shallow elongate recessed portions 31b, 31c respectively in the vicinities of the left side wall 32 and of the right side wall 33. In addition, the bottom wall 31 is formed, in the vicinity of the depthwise wall 34, with plate members 31f, 31g extending in parallel to the side walls 32, 33. Note that a stepped portion 31d is formed slightly higher in close proximity to the opening-formed side of the bottom wall 31.

The side walls 32, 33 have holes 32a, 33a formed at end portions close to the opening-formed side. A rod-like support member 34a is provided extending over an entire width thereof along an upper edge of the depthwise wall 34, of which both ends are formed with holes 34b (one hole is illustrated). Note that the support member 34a includes an engagement portion 34c overhanging toward the opening-formed side from the depthwise wall 34.

Referring next to FIGS. 6 and 8, the cover member 20 is described. The cover member 20 comprises a rectangular upper wall 21 and two side walls 22, 23 connected to the upper wall 21. The upper wall 21 is formed with a rectangular notched portion 21a along a side (an opening-formed side) facing to the opening-formed side of the main body 30 (FIG. 7), and with an extrusion opening 21b in the vicinity of the center thereof. The extrusion opening 21b is formed to have a size enough to enable a finger of the hand to insert therein. Note that the extrusion opening 21b is convenient for taking out the mini disc 100 and, the mini disc 100 exposed from the notched portion 21a being possible of its being seized and thus removed by the fingers, is not therefore necessarily indispensable.

The side walls 22, 23 are connected to the vicinities of the two face-to-face sides of the upper wall 21, and therefore the upper wall 21 includes overhangs 21c, 21d extending outwardly of the side walls 22, 23. Knot-like support members 21e, 21f are provided at edges, opposite to the opening-formed side, of the overhangs 21c, 21d serving as stepped portions. Further, the support members 21e, 21f are formed with spindle members 21g, 21h facing to each other and each taking a short cylindrical shape. Tips of the spindle members 21g, 21h are slightly tapered. Note that the support members 21e, 21f are connected to the upper wall 21 through elongate arms 21i, 21j.

The side walls 22, 23 have elongate plate members 22a, 23a formed facing to each other at lower edges (upper edges in FIG. 8) thereof. Further, cantilever arms 22b, 23b are connected to end portions, opposite to the opening-formed side, of the side walls 22, 23. Tips of the arms 22b, 23b composed as elastic members are formed with swellings 22c, 23c (each assuming a tapered shape) inclined gently toward the depthwise side and the opening side as well. A vertical thickness of each of the swellings 22c, 23c serving as protrusions is approximately 1/2 of a thickness of the cartridge 110 (FIGS. 1 to 3). Further, side walls 22, 23 are formed with protruded portions 22d (FIG. 8), 23d (FIG. 6) protruding in such a direction as to separate from each other in the vicinities of the end portions proximal to the opening-formed side.

FIG. 9 is a bottom view of the cover member 20. Referring to FIG. 9, let d4 be a spacing between the swellings 22c, 23c, and d3 be a distance between the bottom surface of the recessed portion 102c of the cartridge 110 shown in FIG. 3 and the side surface 110d disposed rightward in FIG. 3, there is established a relationship such as d3 =< d4. On the other hand, let d5 be a distance between the two side surfaces 110c and 110d of the cartridge 110 illustrated in FIG. 3, there is established such as d4 =< d5.

Next, there will be explained an operation in this embodiment when the mini disc 100 is encased in the storage case 10. As in the sleeve type according to the prior art, the mini disc 100 can be taken in and out of the storage case 10 in the state where the cover member 20 is closed in accordance with this embodiment. When the mini disc 100 is inserted with the edge surface 110 (FIG. 3) ahead into the storage case, the edge surface 110a thereof impinges upon the engagement portion 34c (FIG. 7) of the main body 30 and is thus unable to advance more inwards.

The swellings 22c, 23c are gently inclined and hence, when the mini disc 100 is inserted into the storage case 10, run on the side surfaces 110c, 110d of the cartridge 110 and slide thereon, at which time the arms 22b, 23b are elastically deformed.

When the edge surface 110a of the cartridge 110 reaches the engagement portion 34c, the swellings 22c, 23c engage with the recessed engagement portions 102b, 102f, and the elastic deformations of the arms 22b, 23b revert to their original shapes. Thus, the swellings 22c, 23c fitted in the recessed engagement portions 102b, 102f, whereby it never happens that the mini disc 100 falls down by a self-weight thereof even when the opening side of the storage case 100 is set downward. This is a convenient aspect for its treatment.

On the other hand, the cartridge 110 takes the rectangular shape and can be therefore inserted with the edge surface 110b (FIG. 3) ahead, i.e., in the opposite direction into the storage case 10. In such a case, the prior art cartridge has no portions with which to engage the swellings 22c, 23c running on the side surfaces of the cartridge, and it therefore follows that the arms 22b, 23b remain to be elastically deformed. If such a state is kept for a short period of time at a normal temperature, no serious problem might arise. If the mini disc is left under a high-temperature environment such as inside an automobile exposed to the burning sun, or if left for a long period of time even at the normal temperature, however, a creep phenomenon might appear in the arms 22b, 23b with the result that the arms 22b, 23b can not revert to their original shape as they remain deformed. In such a case, when the mini disc is inserted in the proper direction, there might be a possibility in which the swellings 22c, 23c and the arms 22b, 23b lose their come-off preventing function.

By contrast, in accordance with this embodiment, the distance d1 to the center of the recessed engagement portion 102b of the cartridge 110 is set equal to the distance d2 to the center of the recessed portion 102c from the edge surface 110b disposed downward in FIG. 3, and hence, when edge surface 110b of the cartridge 110 reaches the engagement portion 34c, the swelling 23c engages with the recessed portion 102c.

Further, the spacing d4 between the swellings 22c and 23c is set equal or larger than the distance d3 between the bottom surface of the recessed portion 102c of the cartridge 110 shown in FIG. 3 and the side surface 110d disposed rightward in FIG. 3, so that the elastic deformations of the arms 22b, 23b revert to their original shapes and are kept in a free state. With this contrivance, even if the mini disc 100 is inserted in the opposite direction into the storage case 10 and is left for the long period of time or under the high-temperature environment, it is feasible to prevent the creep phenomenon from appearing in the arms 22b, 23b, and therefore the come-off preventing function can be ensured.

Note that when the mini disc 100 is inserted in the opposite direction into the storage case 10, the swelling 22c impinges upon the recessed groove 102d facing to the recessed portion 102c and is thus caught on this recessed groove 102d, thereby backing up the come-off preventive effect of the cartridge.

Moreover, when the mini disc 100 is inserted into the recording/reproducing apparatus (not shown)thereof, unlocking from the lock member 106 shown in FIG. 1 is done on the side of the recording/reproducing apparatus, whereby the shutter member 105 moves to the opening position. In accordance with this embodiment, the recessed portion 102c is formed in the position lower by one step than the side surface 110c of the cartridge 110 and is, when the shutter member 105 moves to the opening position, covered with this shutter member 105. Therefore, even if some sort of mechanism is disposed in the vicinity of the cartridge 110 inserted into the recording/reproducing apparatus, it never happens that this mechanism is caught on the recessed portion 102c. Note that if a recessed portion is formed in the place where the recessed groove 102d exists, there might be a possibility where the mechanism is caught thereon, and hence the above recessed portion is not formed in this embodiment.

The present invention has been discussed so far by way of one embodiment but should not be construed as being limited to the above embodiment, and it is taken for granted that the present invention may be properly changed and modified. For example, the arms 22b, 23b are formed integrally with the cover member 20 in the embodiment discussed above and may be formed separately. In this case, a resin such as POM and PP is usable. In addition, the shutter member may be of such a type as to close the opening, formed in only the lower shell, into which the recording/reproducing head is inserted, or may be of such a type as to close the central opening inclusive.

Further, the cartridge in the embodiment discussed above can be stored not only in the storage case shown in FIGS. 4 to 9 but also in a sleeve type storage case as disclosed in, e.g., Japanese Patent Application Laid-Open No.5-278772.

## Claims

1. A cartridge comprising:
a main body stored with a recording medium and formed with an opening from which at least a part of said recording medium is exposed;
a shutter member movable between an opening position for opening the opening and a closing position for closing the opening,
at least one first recessed portion (102b) capable of engaging with corresponding protruded portions provided within a recording or reproducing apparatus for said recording medium when the cartridge is inserted into said recording or reproducing apparatus said at least one first recessed portion is formed in the vicinity of an edge on an inserting side, and
a second recessed portion (102c) covered with said shutter member when said shutter member moves to the opening position, and exposed when said shutter member moves to the closing position
**characterized in that**
the second recessed portion (102c) is formed at a distance (d2) from the edge portion opposite to the inserting side, which is approximately equal to a distance (d1) between the first recessed portion (102b) and the edge on the inserting side.

2. A cartridge according to claim 1
**characterized in that** there are two first recessed portions (102b, 102f) capable of engaging with the corresponding protruded portions provided within a recording or reproducing apparatus, said two first recessed portions are formed in the vicinity of an edge on the inserting side.

3. A cartridge according to claim 2, wherein when said cartridge is inserted into a cartridge storage case (10) which is provided with protruded portions (22c, 23c) in the same direction as that in the case of being inserted into said recording or reproducing apparatus, the protrusions provided within the storage case engage with the first recessed portions and
when said cartridge is inserted into said cartridge storage case in the direction opposite to that in the case of being inserted into said recording or reproducing apparatus, the protrusions provided within the storage case engage with the second recessed portion (102c).

4. A system comprising a cartridge storage case (10) and a cartridge according to any of the preceding claims.

5. A system according to claim 4,
**characterized in that** a pair of protrusions (22c; 23c) are provided in a face-to-face relationship in said cartridge storage case
said cartridge is formed with only one second recessed portion (102c), and
said cartridge is formed with minute rugged portions (102d) facing to the other protrusion not engaging with the second recessed portion.

6. A system according to anyone of claims 4 or 5,
**characterized in that** a pair of protrusions (22c, 23c) of said cartridge storage case (10) are supported by elastic members (22b, 23b) capable of being elastically deformed,
the protrusions permit the insertion of said cartridge against the action of the elastic members which are deformed when said cartridge is inserted into said cartridge storage case (10), and
the elastic members (22b, 23b) biasing said protrusions (22c, 23c) revert to their original shapes from the deformations thereof after said cartridge has been inserted, and engage with the second recessed portion or the first recessed portions, thereby preventing a separation of said cartridge from said cartridge storage case (10).

## Patentansprüche

1. Kartusche, mit:
einem Hauptkörper, in dem ein Aufnahmemedium untergebracht ist, und der mit einer Öffnung ausgebildet ist, von der wenigstens ein Teil des Aufnahmemediums freigelegt wird;
einem Verschlusselement, das zwischen einer Öffnungsposition zum Öffnen der Öffnung und einer Schließposition zum Schließen der Öffnung bewegbar ist,
wenigstens einem ersten ausgenommenen Abschnitt (102b), der in der Lage ist, mit entsprechenden vorstehenden Abschnitten in Eingriff zu kommen, die in einer Aufnahme- oder Wiedergabevorrichtung für das Aufnahmemedium vorgesehen sind, wenn die Kartusche in die Aufnahme- oder Wiedergabevorrichtung eingeführt ist,
wobei der wenigstens eine ausgenommene Abschnitt in der Umgebung eines Randes an einer Einführseite ausgebildet ist, und
einem zweiten ausgenommenen Abschnitt (102c), der mit dem Verschlusselement bedeckt ist, wenn sich das Verschlusselement zu der Öffnungsposition bewegt, und freigelegt ist, wenn sich das Verschlusselement zu der Schließposition bewegt,
**dadurch gekennzeichnet, dass**
der zweite ausgenommene Abschnitt (102c) an einem Abstand (d2) von dem Randabschnitt entgegengesetzt zu der Einführseite ausgebildet ist, der in etwa gleich zu einem Abstand (d1) zwischen dem ersten ausgenommenen Abschnitt (102b) und dem Rand an der Einführseite ist.

2. Kartusche nach Anspruch 1,
**dadurch gekennzeichnet, dass**
es zwei erste ausgenommene Abschnitt (102b, 102f) gibt, die in der Lage sind, mit entsprechenden vorstehenden Abschnitten in Eingriff zu kommen, die in einer Aufnahme- oder Wiedergabevorrichtung vorgesehen sind,
wobei die beiden ersten ausgenommenen Abschnitte in der Umgebung eines Randes an der Einführseite ausgebildet sind.

3. Kartusche nach Anspruch 2,
wobei, wenn die Kartusche in der gleichen Richtung, wie die Richtung in dem Fall, dass sie in die Aufnahme- und Wiedergabevorrichtung eingeführt wird, in ein Kartuschen-Unterbringungsgehäuse (10) eingeführt ist, das mit vorstehenden Abschnitten (22c, 23c) versehen ist, die Vorsprünge, die innerhalb des Unterbringungsgehäuses vorgesehen sind, mit den ersten ausgenommenen Abschnitten in Eingriff kommen, und,
wenn die Kartusche in das Kartuschen-Unterbringungsgehäuse in der Richtung entgegengesetzt zu derjenigen in dem Fall, dass sie in die Aufnahme- und Wiedergabevorrichtung eingeführt wird, eingeführt ist, die Vorsprünge, die innerhalb des Unterbringungsgehäuses vorgesehen sind, mit dem zweiten ausgenommenen Abschnitt (102c) in Eingriff kommen.

4. System mit einem Kartuschen-Unterbringungsgehäuse (10) und einer Kartusche nach einem der vorangehenden Ansprüche.

5. System nach Anspruch 4,
**dadurch gekennzeichnet, dass**
ein Paar von Vorsprüngen (22c, 23c) in einer zueinander gerichteten Beziehung in dem Kartuschen-Unterbringungsgehäuse vorgesehen sind,
wobei die Kartusche mit nur einem zweiten ausgenommenen Abschnitt (102c) ausgebildet ist, und
die Kartusche mit kleinen zerklüfteten Abschnitten (102d) ausgebildet ist, die zu den anderem Vorsprung gerichtet sind, der nicht mit dem zweiten ausgenommenen Abschnitt in Eingriff ist.

6. System nach einem der Ansprüche 4 oder 5,
**dadurch gekennzeichnet, dass**
ein Paar von
Vorsprüngen (22c, 23c) des Kartuschen-Unterbringungsgehäuses (10) durch elastische Elemente (22b, 23b) getragen werden, die in der Lage sind, elastisch verformt zu werden,
wobei die Vorsprünge die Einführung der Kartusche gegen die Wirkung der elastischen Elemente ermöglichen, die verformt werden, wenn die Kartusche in das Kartuschen-Unterbringungsgehäuse (10) eingeführt wird, und
die elastischen Elemente (22b, 23b), welche den Vorsprüngen (22c, 23c) eine Vorspannung erteilen, von den Verformungen derselben zu ihren Ausgangsformen zurückkehren, nachdem die Kartusche eingeführt wurde, und mit dem zweiten ausgenommenen Abschnitt oder den ersten ausgenommenen Abschnitten in Eingriff kommen, wodurch eine Trennung der Kartusche von dem Kartuschen-Unterbringungsgehäuse (10) verhindert wird.

## Revendications

1. Une cartouche comprenant :
un corps principal contenu avec un support d'enregistrement et formé avec une ouverture par laquelle est exposée au moins une partie dudit support d'enregistrement,
un organe obturateur déplaçable entre une position d'ouverture pour ouvrir l'ouverture et une position de fermeture pour fermer l'ouverture,
au moins une première partie en creux (102b) capable de s'engager avec des parties en saillie correspondantes prévues dans un appareil d'enregistrement ou de reproduction pour ledit support d'enregistrement lorsque la cartouche est insérée dans ledit appareil d'enregistrement ou de reproduction, ladite au moins une première partie en creux étant formée au voisinage d'un bord sur un côté d'insertion, et
une seconde partie en creux (102c) couverte par ledit organe obturateur lorsque ledit organe obturateur se déplace vers la position d'ouverture, et exposée lorsque cet organe obturateur se déplace vers la position de fermeture,
**caractérisée en ce que**
la seconde partie en creux (102c) est formée à une distance (d2) de la partie de bord opposée au côté d'insertion, qui est approximativement égale à une distance (d1) entre la première partie en creux (102b) et le bord sur le côté d'insertion.

2. Une cartouche selon la revendication 1,
**caractérisée en ce qu'**il y a deux premières parties en creux (102b, 102f) capables de s'engager avec les parties en saillie correspondantes prévues dans un appareil d'enregistrement ou de reproduction, ces deux premières parties en creux étant formées au voisinage d'un bord sur le côté d'insertion.

3. Une cartouche selon la revendication 2, dans laquelle, lorsque ladite cartouche est insérée dans une boîte de stockage de cartouche (10) qui est pourvue de parties en saillie (22c, 23c) dans la même direction que dans le cas où elle est insérée dans ledit appareil d'enregistrement ou de reproduction, les saillies prévues dans la boîte de stockage s'engagent avec les premières parties en creux, et
lorsque ladite cartouche est insérée dans ladite boîte de stockage dans la direction opposée à celle du cas où elle est insérée dans ledit appareil d'enregistrement ou de reproduction, les saillies prévues dans la boîte de stockage s'engagent avec la seconde partie en creux (102c).

4. Un système comprenant une boîte de stockage (10) et une cartouche selon l'une des revendications précédentes.

5. Un système selon la revendication 4,
**caractérisé en ce qu'**une paire de saillies (22c, 23c) est prévue dans une relation de face-à-face dans ladite boîte de stockage de cartouche,
ladite cartouche est formée avec une seule seconde partie en creux (102c), et
ladite cartouche est formée avec des minuscules parties rugueuses (102d) en face de l'autre saillie ne venant pas s'engager avec la seconde partie en creux.

6. Un système selon l'une des revendications 4 ou 5,
**caractérisé en ce qu'**une paire de saillies (22c, 23c) de ladite boîte de stockage de cartouche (10) sont supportées par des organes élastiques (22b, 23b) capables d'être élastiquement déformées,
les saillies permettent l'insertion de ladite cartouche contre l'action des organes élastiques qui sont déformés lorsque ladite cartouche est insérée dans ladite boîte de stockage de cartouche (10), et
les organes élastiques (22b, 23b) sollicitant lesdites saillies (22c, 23c) reprennent leurs formes originelles à partir des déformations de celles-ci après que la cartouche ait été insérée, et s'engagent avec la seconde partie en creux ou les premières parties en creux, empêchant ainsi une séparation de ladite cartouche d'avec la boîte de stockage de cartouche (10).
